# DEMANDE DE BREVET EUROPEEN

(11) **EP 3 135 557 A1**
(43) Date de publication de la demande: **01.03.2017**
(21) Numéro de dépôt: 16183572.3
(22) Date de dépôt: 10.08.2016
(51) Int. Cl.: B62B 1/18

(54) **BROUETTE COMPRENANT UN CHÂSSIS RENFORCÉ PAR TRIANGULATION**

(30) Priorité: 31.08.2015 FR 1558075
(71) Demandeur: CDH Group, 27610 Romilly sur Andelle (FR)
(72) Inventeur: LACHANT, Patrick, 27610 ROMILLY SUR ANDELLE (FR)
(74) Mandataire: Dejade & Biset

(57) **Abrégé**

Une brouette **(1)** comprenant un moyen **(2)** porte-charge monté sur un châssis **(3)** solidaire d'un système **(4)** de roulage, le châssis comprenant :
- un cadre **(14)** muni :
• d'un butoir **(15)** apte à protéger le système de roulage,
• d'au moins un brancard **(16)** permettant de déplacer la brouette, et
• d'une partie **(17)** milieu reliant le butoir et le brancard, soutenant le moyen porte-charge ;

- un stabilisateur **(19)** muni d'au moins un pied **(20)** apte à assurer la stabilité de la brouette en situation statique ;
- un renfort **(43)** frontal apte à rigidifier le moyen porte-charge ;
le pied du stabilisateur étant solidaire du brancard et de la partie milieu du cadre de telle sorte à rigidifier le brancard, et le châssis comprenant un renfort **(26)** latéral solidaire de la partie milieu du cadre et du pied apte à rigidifier le pied du stabilisateur.

## Description

La présente invention concerne le domaine des véhicules de manutention, notamment du type brouette ou analogue, et a pour objet une brouette ou analogue à châssis renforcé.

Une brouette comprend généralement un moyen porte-charge monté sur une roue ou autre système de roulage, par l'intermédiaire d'un châssis. Le moyen porte-charge peut être une cuve, munie d'une paroi de fond entourée par une paroi avant et une paroi arrière en regards, et par deux parois latérales qui relient la paroi avant et la paroi arrière. Le châssis comprend un cadre, muni de deux brancards comprenant des poignées de préhension. Le châssis comprend également deux pieds, assurant la stabilité de la brouette en situation statique.

Lors du transport d'une charge, le poids de celle-ci exerce un effort pouvant déformer la paroi de fond de la cuve. De même, lors du déchargement, un effort est exercé sur la paroi avant de la cuve, pouvant entraîner une déformation de cette dernière.

Le document FR 2705305 décrit une brouette comprenant une cuve montée sur un châssis. Le châssis comprend un cadre muni de deux brancards et d'une plaque transversale, sur lequel sont fixés des pieds et un renfort frontal. Une telle brouette permet ainsi de rigidifier la paroi de fond et la paroi avant, par le biais respectif de la plaque transversale et du renfort frontal, limitant les risques de leur déformation.

Cependant, le cadre s'étendant sur toute la longueur de la brouette peut lui-même se déformer sous le poids d'une charge, au niveau des brancards, lors du transport de la charge.

Afin de rigidifier le cadre du châssis d'une brouette, il est connu d'ajouter au châssis un renfort solidaire des brancards, comme décrit dans le document EP 0858939, le châssis de la brouette comprenant un cadre muni de deux brancards et de deux pieds. Dans ce montage antérieur, le cadre est solidaire d'une roue et d'une partie avant d'une paroi de fond d'une cuve. Le châssis comprend également un renfort solidaire de la paroi de fond de la cuve et du cadre, au niveau de la partie avant de la paroi de fond. Le renfort est également solidaire de la paroi de fond de la cuve et du cadre, au niveau des brancards, afin de rigidifier ces derniers et d'amoindrir ou d'éviter leur déformation lors du transport d'une charge.

Une telle brouette permet effectivement de rigidifier la paroi de fond de la cuve et les brancards pendant le transport et le déchargement d'une charge. Cependant, lorsqu'un opérateur pose la brouette ou que la brouette est stabilisée sur ses pieds, ces derniers, soumis au poids d'une charge présente dans la cuve, peuvent se déformer et déstabiliser la brouette.

Un premier objectif est de proposer une brouette comprenant un châssis renforcé, apte à minimiser une déformation des pieds du châssis, lorsque la brouette est soumise à une charge.

Un deuxième objectif est de proposer une brouette comprenant un châssis renforcé, apte à minimiser une déformation des brancards du châssis lorsque la brouette est soumise à une charge.

Un troisième objectif est de proposer une brouette comprenant un châssis renforcé, apte à minimiser une déformation de la paroi avant d'une cuve lorsque la brouette est soumise à une charge.

Un quatrième objectif est de proposer une brouette comprenant une cuve, apte à minimiser une déformation de la paroi de fond de la cuve lorsque la brouette est soumise à une charge.

Un cinquième objectif est de proposer une brouette comprenant un moyen d'amortissement, apte à minimiser un effort exercé par une charge sur la brouette lors du transport de la charge sur un terrain accidenté.

Un sixième objectif est de proposer une brouette facilitant sa palettisation et son gerbage, afin d'améliorer son transport et son conditionnement.

A cet effet, il est proposé, en premier lieu, une brouette comprenant un moyen porte-charge monté sur un châssis solidaire d'un système de roulage, le châssis comprenant :
- un cadre muni :
   - d'un butoir apte à protéger le système de roulage,
   - d'au moins un brancard permettant de déplacer la brouette, et
   - une partie milieu reliant le butoir et le brancard, soutenant le moyen porte-charge ;
- un stabilisateur muni d'au moins un pied apte à assurer la stabilité de la brouette en situation statique ;
- un renfort frontal apte à rigidifier le moyen porte-charge ;
le pied du stabilisateur étant solidaire du brancard et de la partie milieu du cadre, de sorte à rigidifier le brancard, le châssis comprenant un renfort latéral solidaire de la partie milieu du cadre et du pied, apte à rigidifier le pied du stabilisateur.

Un tel châssis rigidifie le pied de la brouette, pour des phases où la brouette est en situation statique. Un tel châssis rigidifie également le brancard de la brouette, pour des phases où la brouette est en situation de déplacement.

Ainsi, une brouette comprenant un tel châssis est apte à supporter des charges plus importantes. Le dimensionnement du châssis peut également être réduit, apportant à la brouette un gain en masse.

Un tel châssis, comprenant quatre éléments indépendants, à savoir un stabilisateur, un cadre, un renfort frontal et un renfort latéral, permet une palettisation et un gerbage amélioré, apte à faciliter le transport et le conditionnement de la brouette.

Diverses caractéristiques supplémentaires peuvent être prévues, seules ou en combinaison :
- le stabilisateur comprend une fixation avant, apte à solidariser le moyen porte-charge et le châssis ;
- le renfort latéral comprend une fixation arrière, apte à solidariser le moyen porte-charge et le châssis ;
- un manchon solidarise le brancard du cadre et le pied du stabilisateur ;
- le cadre, le stabilisateur et le renfort latéral sont soudés les uns aux autres ;
- le cadre, le stabilisateur et le renfort latéral sont vissés les uns aux autres ;
- le système de roulage comprend un amortisseur ;
- le système de roulage comprend une roue ;
- le système de roulage comprend deux roues ;
- le moyen porte-charge est une cuve, comprenant une paroi de fond entourée par une paroi avant et une paroi arrière en regards, et par deux parois latérales qui relient la paroi avant et la paroi arrière, la paroi de fond étant munie de nervures aptes à rigidifier la cuve.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une vue schématique en perspective d'une brouette selon un premier mode de réalisation ; en médaillon est illustré un détail à échelle agrandi d'un amortisseur ;
- la figure 2 est une vue schématique en perspective d'une brouette selon un deuxième mode de réalisation ; en médaillon est illustré un détail à échelle agrandi de l'amortisseur ;
- la figure 3 est une vue schématique en perspective de la brouette selon le premier mode de réalisation ;
- la figure 4 est une vue schématique de dessous de la brouette selon le premier mode de réalisation ;
- la figure 5 est une vue schématique en perspective d'un châssis de la brouette selon le premier mode de réalisation.

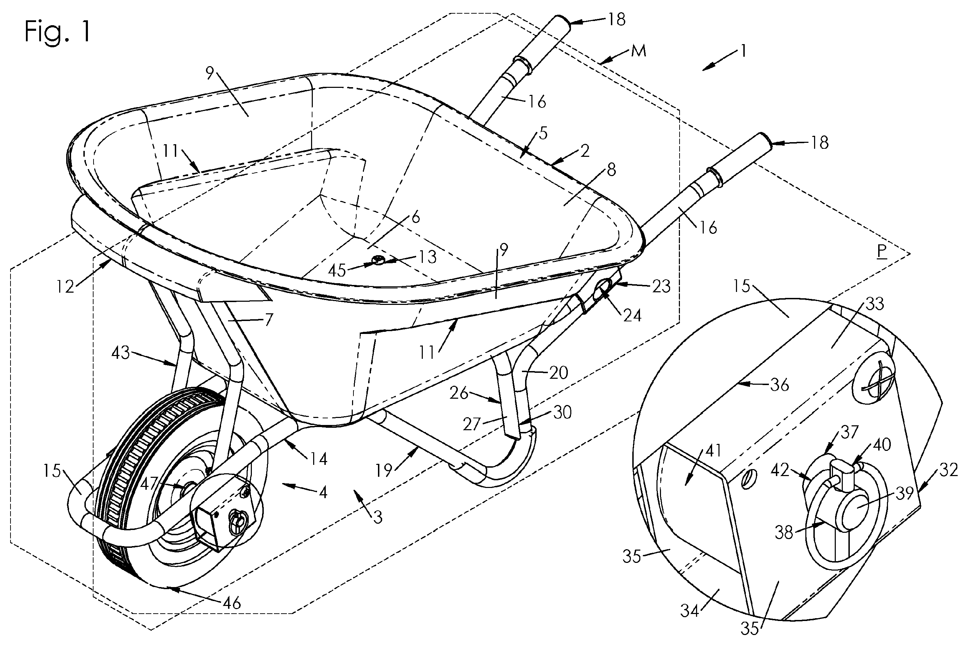

Sur les figures 1 à 4 est représentée une brouette **1** comprenant un moyen **2** porte-charge monté sur un châssis **3** solidaire d'un système **4** de roulage.

Dans la description ci-dessous, la brouette **1** est décrite assemblée.

Selon un mode de réalisation représenté sur les figures 1 à 4, le moyen **2** porte-charge se présente sous la forme d'une cuve **5**. La cuve **5** comprend une paroi **6** de fond entourée par une paroi **7** avant et une paroi **8** arrière en regards, et par deux parois **9** latérales qui relient la paroi **7** avant et la paroi **8** arrière.

Les parois **6**, **7**, **8**, **9** se présentent sous la forme d'une tôle emboutie. En variante, la cuve est réalisée en matériau composite ou en matériau polymère et est par exemple moulée.

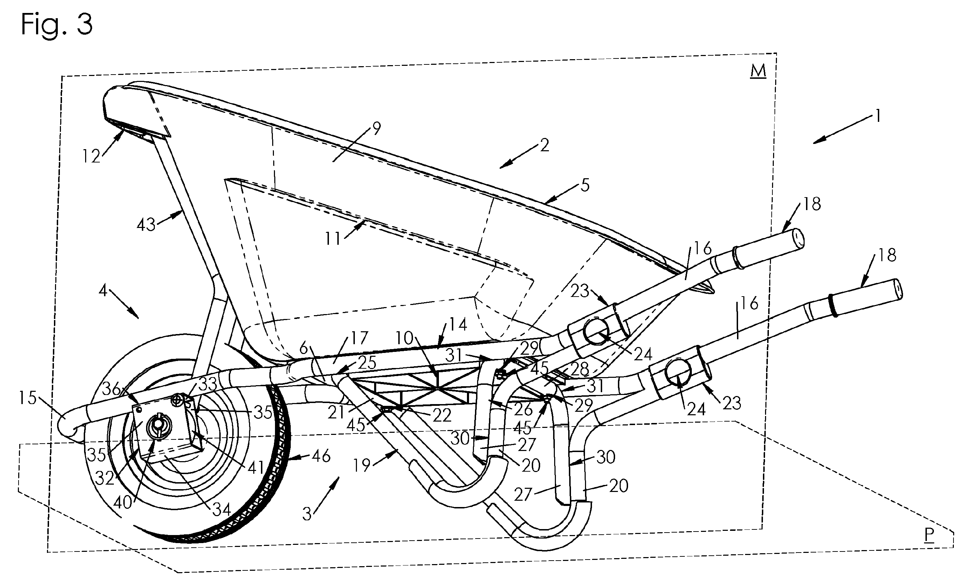

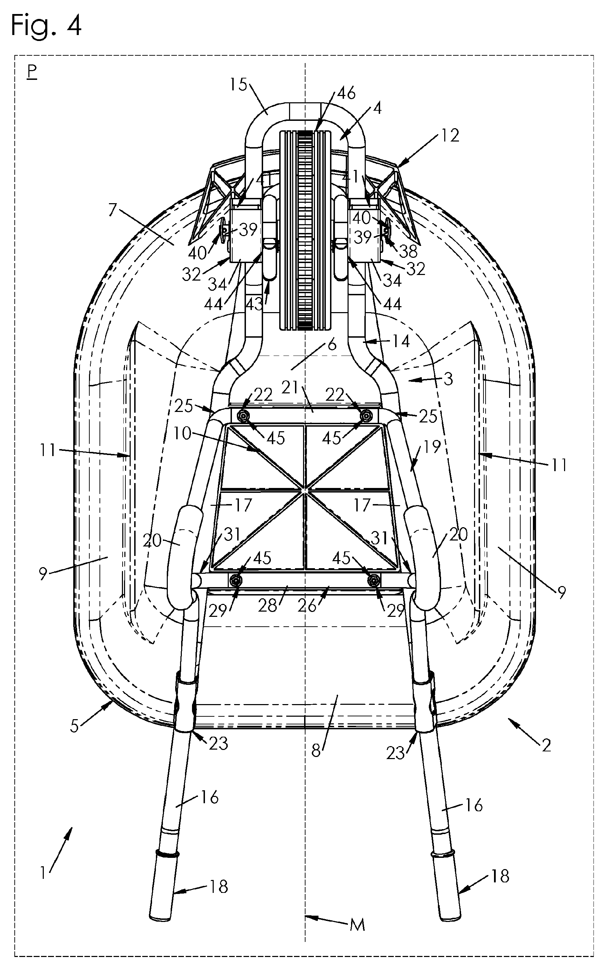

Comme illustré sur les figures 3 et 4, la paroi **6** de fond de la cuve **5** comprend des nervures **10** et les parois **9** latérales comprennent des rainures **11,** aptes à rigidifier la cuve **5.** La cuve **5** comprend également un bouclier **12** en saillie de la paroi **7** avant.

La paroi **6** de fond de la cuve **5** comprend quatre perçages **13** de fixation.

Selon des modes de réalisation non représentés, diverses caractéristiques supplémentaires peuvent être prévues, seules ou en combinaison :
- les parois **6**, **7**, **8**, **9** se présentent sous la forme d'un quadrillage tubulaire,
- la cuve **5** de la brouette **1** comprend uniquement une paroi **6** de fond, une paroi **7** avant et deux parois **9** latérales,
- la cuve **5** comprend uniquement une paroi **6** de fond et une paroi **7** avant,
- les parois **6, 7, 8, 9** sont amovibles.

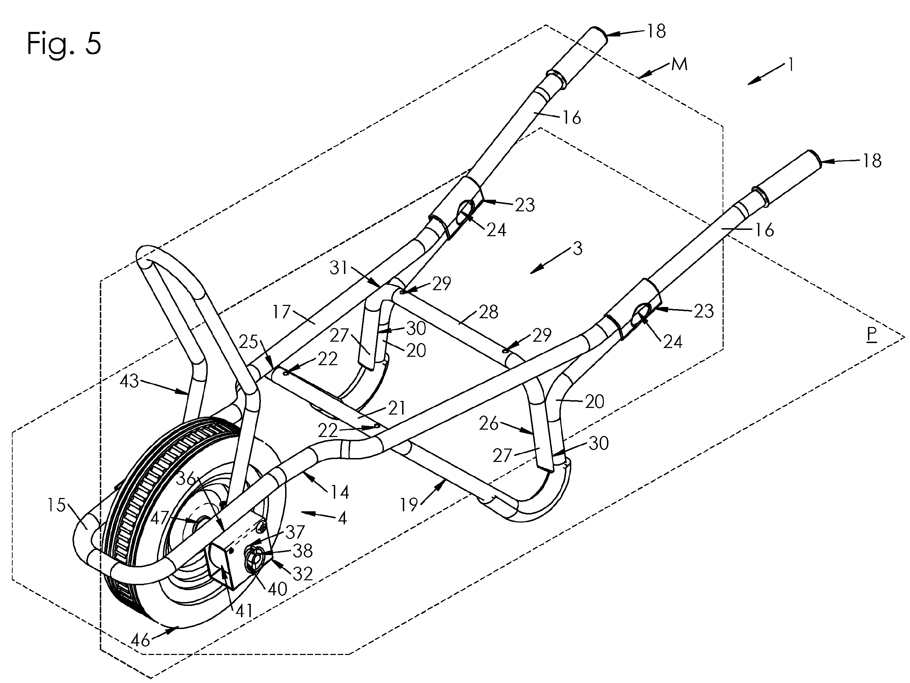

Comme illustré sur les figures 1 à 5, le châssis **3** comprend un cadre **14** muni d'un butoir **15,** de deux brancards **16** et d'une partie **17** milieu, reliant le butoir **15** et le brancard **16.** Les brancards **16** comprennent des poignées **18** de préhension.

Le châssis **3** comprend également un stabilisateur **19** muni de deux pieds **20** et d'une fixation **21** avant, reliant les deux pieds **20.** La fixation **21** avant comprend deux perçages **22** avant, aptes à être alignés avec deux des perçages **13** de fixation de la paroi **6** de fond de la cuve **5**.

Les pieds **20** sont solidaires des brancards **16** du cadre **14,** par le biais de deux manchons **23** au niveau de deux premières zones **24** de contact. Selon un mode de réalisation préféré, la fixation **21** avant du stabilisateur **19** est également solidaire de la partie **17** milieu du cadre **14,** au niveau de deux deuxièmes zones **25** de contact.

Le système **4** de roulage et les pieds **20** du stabilisateur **19** définissent un plan **P** de pose. La brouette **1** est sensiblement symétrique par rapport à un plan **M** milieu, perpendiculaire au plan **P** de pose et passant sensiblement par le centre du système **4** de roulage et de manière équidistante des pieds **20**.

Le châssis **3** comprend un renfort **26** latéral, muni de deux bras **27** et d'une fixation **28** arrière, reliant les deux bras **27.** La fixation **28** arrière comprend deux perçages **29** arrière, aptes à être alignés avec deux des perçages **13** de fixation de la paroi **6** de fond de la cuve **5**.

Les bras **27** sont solidaires des pieds **20** du stabilisateur **19** au niveau de deux troisièmes zones **30** de contact. Selon un mode préféré de réalisation, la fixation **28** arrière du renfort **26** latéral est solidaire de la partie **17** milieu du cadre **14,** au niveau de deux quatrièmes zones **31** de contact.

Le système **4** de roulage comprend deux paliers **32.** Les paliers **32** ont une forme de tube à section rectangulaire formés par un côté **33** supérieur et un côté **34** inférieur en regards, et par deux côtés **35** latéraux, qui relient le côté **33** supérieur et le côté **34** inférieur.

Les paliers **32** sont disposés chacun d'un côté du plan **M** milieu. Un côté **35** latéral de chaque palier **32** est solidaire du butoir **15** du cadre **14,** au niveau d'une cinquième zone **36** de contact.

Les côtés **35** latéraux des paliers **32** comprennent chacun un trou **37** traversant, de forme sensiblement oblongue. Les trous **37** traversant sont disposés de telle sorte qu'un axe **38** soit apte à être logé dans les trous **37** des paliers **32.**

Selon un mode réalisation préféré, l'axe **38** est maintenu en ses extrémités **39** par des goupilles **40.** Selon un mode de réalisation non représenté, les extrémités **39** de l'axe **38** sont filetées, et un écrou maintient l'axe **38** dans les trous **37** traversant des paliers **32.**

Le système **4** de roulage comprend deux amortisseurs **41** de forme extérieure pouvant être carré ou sensiblement cylindrique et comprenant une lumière **42,** de forme complémentaire à la forme de l'axe **38.** Chaque amortisseur **41** est apte à être logé dans le palier **32,** de telle sorte que le côté **33** supérieur et le côté **34** inférieur des paliers **32** soient sensiblement en contact avec l'amortisseur **41,** que le trou **37** des paliers **32** soit aligné avec la lumière **42** des amortisseurs **41** et que l'axe **38** soit apte à être logé dans les lumières **42.**

Le châssis **3** comprend un renfort **43** frontal, solidaire des paliers **32** au niveau d'une sixième zone **44** de contact. Le renfort **43** frontal est solidaire de la paroi **7** avant de la cuve **5.**

La paroi **6** de fond de la cuve **5** est apte à être fixée à la fixation **21** avant du stabilisateur **19** et à la fixation **28** arrière du renfort **26** latéral, de telle sorte que la fixation **21** avant et la fixation **28** arrière soient disposées de part et d'autre des nervures **10** de la cuve **5.** Selon un mode préféré de réalisation, la partie **17** milieu du cadre **14** est en contact avec la paroi **6** de fond de la cuve **5,** de sorte que la partie **17** milieu soit disposée de part et d'autre des nervures **10** de la cuve **5**.

Des boulons **45** de fixation sont aptes à être logés dans les perçages **22** avant et les perçages **13** de fixation ainsi que dans les perçages **29** arrière et les perçages **13** de fixation, afin de solidariser la cuve **5** et le châssis **3** de la brouette **1**.

Au niveau de la première à la sixième zones **24**, **25**, **30**, **31**, **36**, **44** de contact, les éléments de la brouette **1** peuvent être solidarisés par :
- soudage,
- vissage, et/ou
- des moyens d'assemblage par déformation élastique et coopération de forme, de type clip de fixation.

De telles zones **24**, **25**, **30**, **31**, **36**, **44** de contact établissent une triangulation du châssis **3** de la brouette **1,** permettant de rigidifier géométriquement le châssis **3**, quel que soit le moyen choisi pour solidariser chacune des zones **24**, **25**, **30**, **31**, **36**, **44** de contact.

Selon un premier mode de réalisation, représenté sur les figures 1, 3, 4 et 5, le système **4** de roulage comprend une roue **46**, disposée entre les paliers **32**.

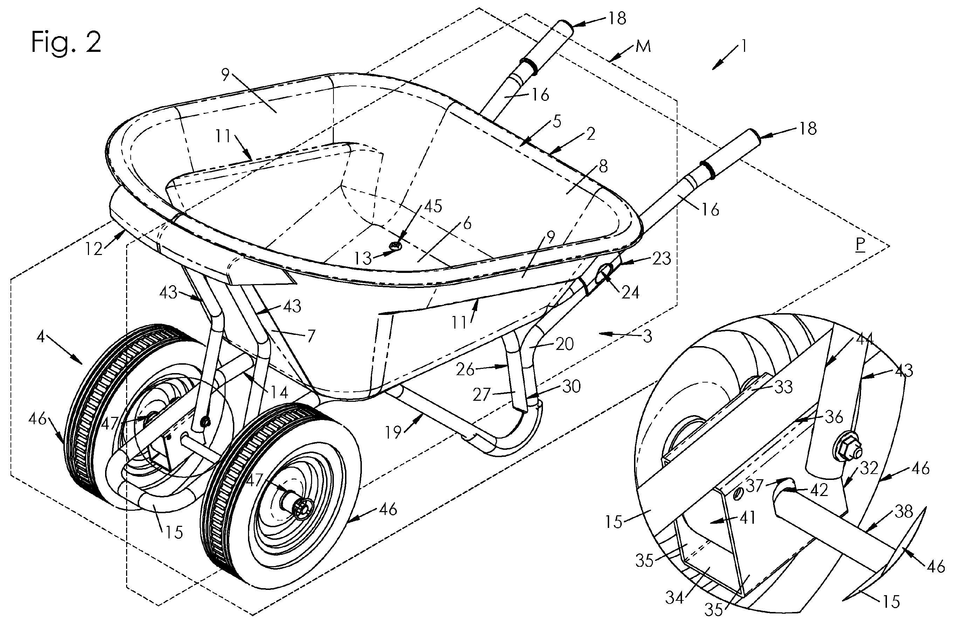

Selon un deuxième mode de réalisation, représenté sur la figure 2, le système **4** de roulage comprend deux roues **46,** disposées de part et d'autre des paliers **32.**

La roue **46** est de forme sensiblement cylindrique. La roue **46** comprend, en son centre, une ouverture **47** apte à laisser passer l'axe **38.**

Selon un mode de réalisation, la roue **46** est pleine, de sorte à ce qu'elle soit increvable. Selon un mode de réalisation différent, la roue **46** est gonflée, de sorte à mieux absorber les secousses liées au terrain sur lequel la brouette **1** roule. Selon un autre mode de réalisation, la roue est fabriquée en une matière la rendant increvable et apte à absorber les secousses liées au terrain sur lequel la brouette **1** roule.

Le butoir **15** du cadre **14** est de taille supérieur au diamètre de la roue **46.** Ainsi, lorsque la brouette **1** est en phase de déchargement, c'est-à-dire que le plan **P** de pose est sensiblement vertical, le bouclier **12** de la cuve **5** et le butoir **15** reposent sur le sol protégeant la roue **46**.

Un tel châssis **3** rigidifie les pieds **20** de la brouette **1,** pour des phases où la brouette **1** est en situation statique. Un tel châssis **3** rigidifie également les brancards **16** de la brouette **1,** pour des phases où la brouette **1** est en situation de déplacement.

Ainsi, une brouette **1** comprenant un tel châssis **3** est apte à supporter des charges plus importantes. Le dimensionnement du châssis **3** peut également être réduit, apportant à la brouette **1** un gain en masse.

Un tel châssis **3,** comprenant quatre éléments indépendants à savoir un stabilisateur **19,** un cadre **14,** un renfort **43** frontal et un renfort **26** latéral, permet une palettisation et un gerbage amélioré, apte à faciliter le transport et le conditionnement de la brouette **1**.

## Revendications

1. Brouette (**1**) comprenant un moyen (**2**) porte-charge monté sur un châssis (**3**) solidaire d'un système (**4**) de roulage, le châssis (**3**) comprenant :
- un cadre (**14**) muni :
• d'un butoir (**15**) apte à protéger le système (**4**) de roulage,
• d'au moins un brancard (**16**) permettant de déplacer la brouette (**1**), et
• d'une partie (**17**) milieu reliant le butoir (**15**) et le brancard (**16**), soutenant le moyen (**2**) porte-charge ;
- un stabilisateur (**19**) muni d'au moins un pied (**20**) apte à assurer la stabilité de la brouette (**1**) en situation statique ;
- un renfort (**43**) frontal apte à rigidifier le moyen (**2**) porte-charge ; la brouette (**1**) étant **caractérisée en ce que** le pied (**20**) du stabilisateur (**19**) est solidaire du brancard (**16**) et de la partie (**17**) milieu du cadre (**14**), de sorte à rigidifier le brancard (**16**), le châssis (**3**) comprenant un renfort (**26**) latéral solidaire de la partie (**17**) milieu du cadre (**14**) et du pied (**20**), apte à rigidifier le pied (**20**) du stabilisateur (**19**).

2. Brouette (**1**) selon la revendication précédente, **caractérisée en ce que** le stabilisateur (**19**) comprend une fixation (**21**) avant apte à solidariser le moyen (**2**) porte-charge et le châssis (**3**).

3. Brouette (**1**) selon l'une quelconque des revendications précédentes, **caractérisée en ce que** le renfort (**26**) latéral comprend une fixation (**28**) arrière, apte à solidariser le moyen (**2**) porte-charge et le châssis (**3**).

4. Brouette (**1**) selon l'une quelconque des revendications précédentes, **caractérisée en ce qu'**un manchon (**23**) ferme une extrémité du pied (**20**), le manchon (**23**) pouvant servir à solidariser le brancard (**16**) du cadre (**14**) et le pied (**20**) du stabilisateur (**19**).

5. Brouette (**1**) selon l'une quelconque des revendications précédentes, **caractérisée en ce que** le cadre (**14**), le stabilisateur (**19**) et le renfort (**26**) latéral sont soudés les uns aux autres.

6. Brouette (**1**) selon l'une quelconque des revendications 1 à 4, **caractérisée en ce que** le cadre (**14**), le stabilisateur (**19**) et le renfort (**26**) latéral sont vissés les uns aux autres.

7. Brouette (**1**) selon l'une quelconque des revendications précédentes, **caractérisée en ce que** le système (**4**) de roulage comprend un amortisseur (**41**).

8. Brouette (**1**) selon l'une quelconque des revendications précédentes, **caractérisée en ce que** le système (**4**) de roulage comprend une roue (**46**).

9. Brouette (**1**) selon l'une quelconque des revendications 1 à 7, **caractérisée en ce que** le système (**4**) de roulage comprend deux roues (**46**).

10. Brouette (**1**) selon l'une quelconque des revendications précédentes, **caractérisée en ce que** le moyen (**2**) porte-charge est une cuve (**5**) comprenant une paroi (**6**) de fond entourée par une paroi (**7**) avant et une paroi (**8**) arrière en regards, et par deux parois (**9**) latérales qui relient la paroi (**7**) avant et la paroi (**8**) arrière, la paroi (**6**) de fond étant munie de nervures (**10**) aptes à rigidifier la cuve (**5**).
